# EUROPEAN PATENT SPECIFICATION

(11) **EP 3 339 764 B1**
(45) Date of publication and mention of the grant of the patent: **12.08.2020**
(21) Application number: 17207931.1
(22) Date of filing: 18.12.2017
(51) Int. Cl.: F24H 3/00, A47K 10/06, F24D 13/02, F28D 1/053, H05B 3/54

(54) **DEVICE FOR HEATING A ROOM, ASSEMBLABLE MODULAR HEATING SYSTEM THEREWITH AND PROCESS FOR PRODUCING THE DEVICE**
VORRICHTUNG ZUR ERWÄRMUNG EINES ZIMMERS, MONTIERBARES MODULARES HEIZSYSTEM DAMIT UND VERFAHREN ZU DESSEN HERSTELLUNG
DISPOSITIF DE CHAUFFAGE D'UNE PIÈCE, SYSTÈME DE CHAUFFAGE ASSEMBLABLE AVEC LE MÊME ET MÉTHODE DE FABRICATION DU DISPOSITIF

(30) Priority: 21.12.2016 IT 201600129225
(43) Date of publication of application: 27.06.2018
(73) Proprietor: DL RADIATORS S.R.L., 31100 Treviso (TV) (IT)
(72) Inventor: SPERANZON, Renato, 31045 Motta di Livenza (TV) (IT); VALENTE, Stefano, 33077 Sacile (PN) (IT)
(74) Representative: Rapisardi, Mariacristina

(56) References cited:
- EP-A1- 3 009 057
- EP-A1- 3 096 094
- WO-A2-2007/137305
- FR-A1- 2 985 654
- GB-A- 2 212 037
- GB-A- 2 365 114
- GB-A- 2 451 109
- US-A- 5 236 095

## Description

The present invention relates to a device for heating a room.

In recent years heating devices of various types have been developed, in particular electric or hot water radiators for heating a room and towel warmers for bathrooms.

Depending on the installed capacity, such devices can have a considerable size and weight which complicate packaging, warehouse storage, handling, transport and final installation.

GB2212037 A, GB2365114A, WO2007/137305 A2, EP 3096094 A1 and FR2985654 disclose a device for heating a room according to the preamble of claim 1.

The technical task that the present invention sets itself is thus to provide a device for heating a room which enables the aforesaid technical drawbacks of the prior art to be overcome.

Within the scope of this technical task, one object of the invention is to provide a device for heating a room which simplifies production, packaging, warehouse storage, handling, transport and installation.

Another object of the invention is to provide a device for heating a room which has extremely modest production and sale costs.

Yet another object of the invention is to provide a device for heating a room which can be flexibly customised according to aesthetic tastes and specific technical requirements.

Another object of the invention is to provide a device for heating a room which lends itself to simplifying maintenance and repairs.

The technical task, as well as these and other objects, according to the present invention, are achieved by providing a device for heating a room characterised in that it has an assemblable modular structure comprising at least one upright member, a plurality of cross members, modules assemblable to one another for the connection of said cross members to said upright member and a heating circuit which extends along said upright member and said cross members and through said modules.

In one embodiment of the invention, a single upright member is provided.

In one embodiment of the invention, at least two upright members are provided, said plurality of cross members being disposed between them, and said connection modules being provided at each end of said cross members for the connection of said cross members to said two upright members.

According to the invention, stack of modules connected to one another in cascade fashion is positioned in a longitudinal cavity of said at least one upright member.

Advantageously, said modules have a shape mating that of said longitudinal cavity, which in turn has sliding guides for said modules.

Advantageously, said at least one upright member has, along the entire length thereof, an opening for the access of said end of said cross member to said longitudinal cavity. Advantageously, said modules have a quick coupling hole for the end of said cross member.

In one embodiment of the invention, the heating circuit is fragmented into a plurality of segments connectible to one another.

In this embodiment of the invention, each module incorporates a segment of the heating circuit. In this case, in the stack of modules the segments of the heating circuit are connected to one another in cascade fashion.

In one embodiment of the invention said heating circuit comprises electrical resistance heating elements positioned in said cross members.

In this case said segments are segments of an electrical line for powering said heating elements. In this case, said modules are preferably made of an electrically insulating material in which said electrical line segment is encased.

In this case, said heating circuit preferably has a manual switch mounted on said at least one upright member.

In one embodiment of the invention, the heating circuit instead comprises a monolithic element. In this case, said heating circuit preferably comprises a flexible heating cable that extends along said cross members, along said at least one upright member and through said modules.

In one embodiment of the invention, the heating circuit comprises a channel containing a heat carrier fluid.

In this case, said segments are channel segments of said channel.

The present invention also discloses a process for producing a device for heating a room made up of at least one upright member and a plurality of cross members containing within them a heating means, characterised in that the cross members are connected to the upright member by applying a connection module at the end of each cross member and introducing the modules in succession along a longitudinal cavity of the upright member, making the end of the cross member slide along a lateral opening of the upright member provided to enable access of the end of the cross members to the longitudinal cavity of the upright member.

The heating device according to the invention is thus the result of the composition of modules, which enable a customisation of the product according to aesthetic tastes and specific technical needs.

Its modularity makes the heating device particularly advantageous in the "DIY" sector, by virtue of the fact that it leads to considerable savings in terms of production, storage, transport and maintenance costs.

In fact, the product can be stored in a warehouse and transported with its components disassembled in order o be assembled later on the installation site.

The packaging is also extremely compact, orderly and protected through the use of various compartments provided based on the type of components, so that it can be organised based on the installation sequence of each component.

This boxing configuration, especially in the case of manual packing, makes it possible to quickly visually check whether each individual component is present or not.

The production of components on a large scale can take place without the need for specialised workers and stock can be managed in a completely automatic manner. Each individual component lends itself to being boxed by means of a completely automated system, which can pick up each individual component from a robotic storage facility.

Uncouplable quick coupling systems are advantageously provided for assembly of the product. For maintenance or repair, therefore, it is possible to disassemble the product with the same ease with which it was assembled and if necessary replace only the damaged or defective component. The modularity also offers the possibility of modifying the shape and size of the product, by adding to it and expanding it after the initial installation, for example in order to increase the installed heating capacity.

In particular, several devices can be connected to one another in cascade fashion, directly or via straight or angle couplings, in order to be adapted to the installation space.

The heating device according to the invention can have a manual adjustment and control system or an electronic one which can also be managed remotely via the Internet.

The heating device according to the invention can incorporate a blower for the distribution of heat energy.

The heating device according to the invention can be of the wall-mountable type or can be positioned anywhere and in this case it preferably has a supporting stand, for example a supporting stand having two housings at the top in which the lower ends of the two upright members can be inserted.

The stand can be fitted with wheels to facilitate moving the device.

The blower, if provided, can in this case also be installed on the same supporting stand.

In one version of the heating device that is particularly suitable in the field of electric or hot water towel warmers, the cross members and the upright members are metal profiles, for example made of aluminium alloy, and the connection modules are made of electrically insulating plastic.

Other characteristics of the present invention are also defined in other dependent claims. Additional features and advantages of the invention will become more apparent from the description of a preferred but non-exclusive embodiment of the heating device according to the invention, illustrated by way of non-limiting example in the appended drawings, in which:
figure 1 shows a perspective view of an electric towel warmer according to the invention;
figure 2 shows a plan view of a detail of the device of figure 1 sectioned along a plane transversal to the upright member;
figure 3 shows a side elevation view of a detail of the device of figure 1 sectioned along a plane containing the axis of the upright member and cross members, in which two connection modules are aligned for assembly.
figure 4 shows a side elevation view of a detail of a hot water towel warmer according to a second embodiment of the invention, sectioned along a plane containing the axis of the upright member and cross members, in which two connection modules are aligned for assembly;
figure 5 shows a schematic view of the device of figure 4;
figure 6 shows a variant of the device in which the heating circuit is made up of a heating cable; figure 7 shows the disassembled components of the device of figure 6;
figure 8 shows a variant of the device of figure 6 in which only one upright member is provided. In the various embodiments of the invention, equivalent elements will be indicated with the same numerical reference.

With reference to the figures, they show a device for heating a room denoted in its entirety by the reference number 1.

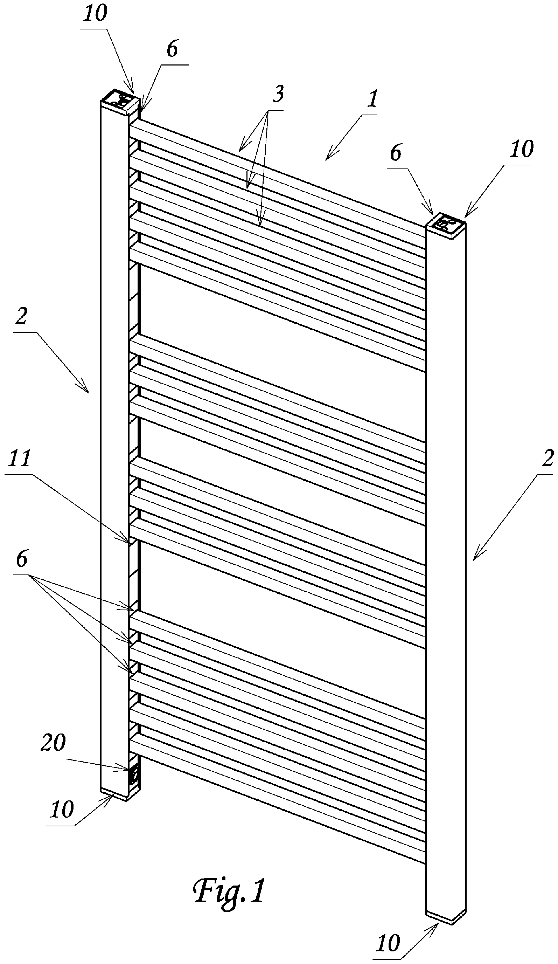

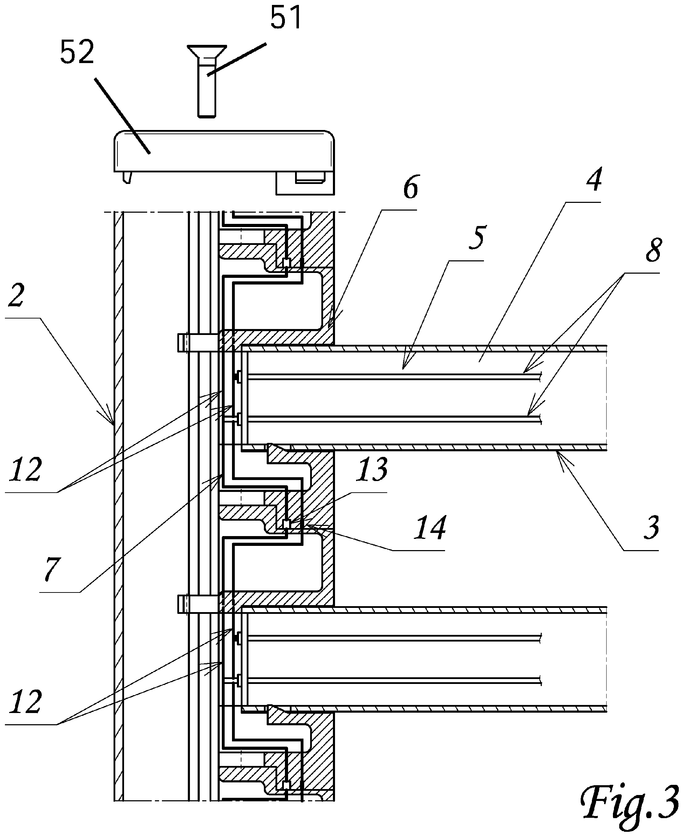

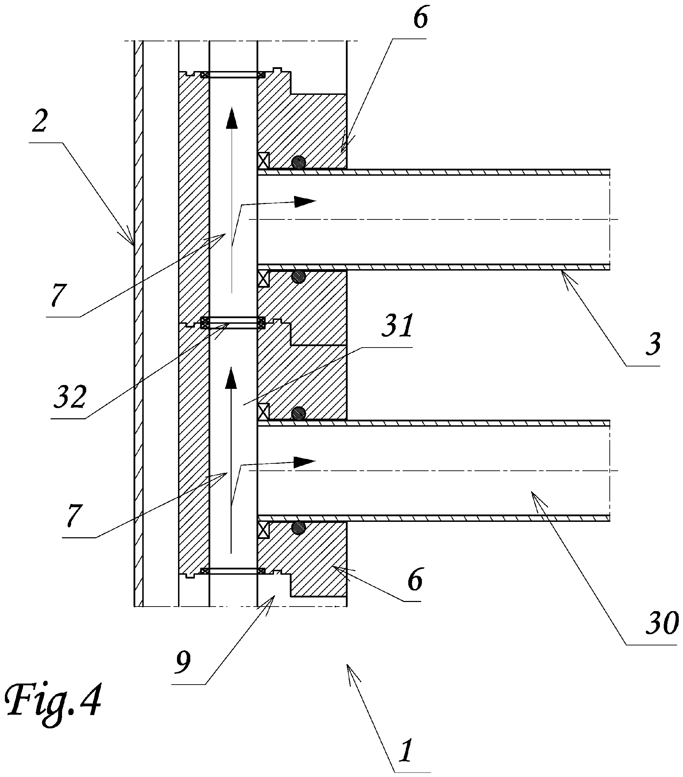

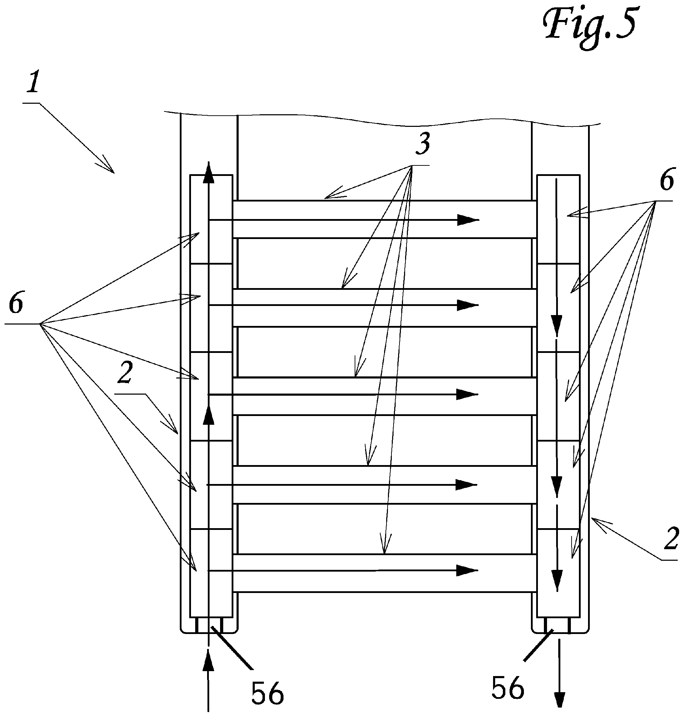

Figures 1 - 3, 6 - 8 show three versions of an electric towel warmer configured for fixed wall mounting, but the scope of the invention also comprises heating devices of another type: for example, figures 4 and 5 show a version of a hot water radiator.

If electric, the radiators can be fixed or repositionable and are provided in the latter case with a supporting stand 54.

The heating device 1 illustrated in figures 1 - 3, 6 and 7 advantageously comprises an assemblable modular structure made up of two upright members 2, a plurality of cross members 3 disposed between the upright members 2, connection modules 6 for connecting the cross members 3 to the upright members 2, and a heating circuit 5 which extends along the upright members 2 and cross members 3 and through the modules 6.

The modules 6 are provided at each of the two ends of each cross member 3.

The modules 6 positioned at each of the counterpart ends of the cross members 3 engage with the next one, thus forming a stack of modules 6 housed along a longitudinal cavity 9 of the upright member 2.

The longitudinal cavity 9 extends along the whole length of the upright member 2 and is accessible to the modules 6 from the bases 10 of the upright member 2 and to the cross member 3 from a lateral opening 11 of the upright member 2 which extends along the whole length of the upright member 2.

The longitudinal cavity 9 of the upright member 2 has a shape mating that of the stack of modules 6 so as to permit the guided insertion of the modules 6 along the axis of the upright member 2 without modifying their orientation.

The modules 6 engage by friction and sliding in the longitudinal cavity 9 of the upright member 2 and are guided along guides 9a, 11a inside the cavity 9 so as to maintain the position assumed at the end of the insertion thereof.

The module 6 has a quick coupling hole 15 for the end of the cross member 3.

The hole 15 has a bottom 16 and a side wall 16a provided with a snap tooth 18 with which a slot 19 provided on the end of the cross member 3 engages.

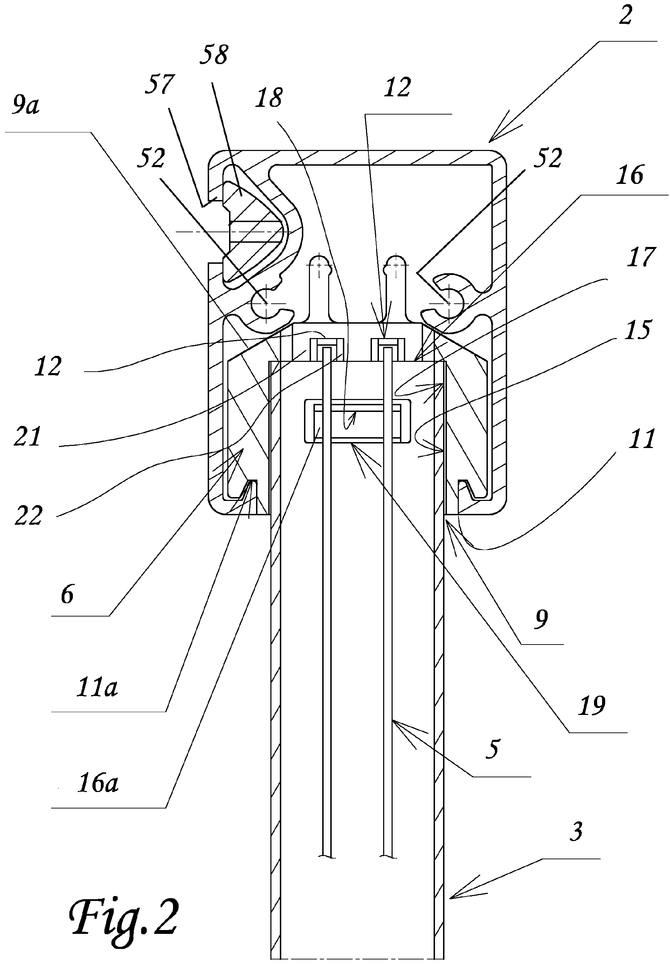

The heating circuit 5 in the example illustrated in figures 2 - 3 comprises electrical resistance heating elements 8 which extend longitudinally along an axial cavity 4 of the cross members 3. Each module 6 moreover incorporates a segment 7 of the heating circuit 5.

The segments 7 of the heating circuit 5 provided in the modules 6 of each stack of modules 6 are connected to one another in cascade fashion.

In the illustrated solution in which the modules 6 inserted in the two upright members 2 are all the same, if the electrical resistance heating element 8 is configured to receive the electrical power supply from only one end, the segments 7 in the stack of modules 6 positioned in the upright member 2 closest to that end will be active, whilst the segments 7 in the stack of modules 6 positioned in the upright member 2 farthest from that end will be inactive.

The segments 7 in this embodiment of the invention are segments of an electrical power line supplying the heating elements 8.

The segments 7 of the electrical power line are made up of conductive wires or conductive tracks.

The segments 7 can be covered with a sheath of electrically insulating material or can be encased in the body of the module 6, which in this case must be made of electrically insulating material. For the electrical connection between the segments 7 of the adjacent modules 6, there are provided male and female electrical connectors 13, 14 positioned on juxtaposed faces of the adjacent modules 6.

Analogously, for the electrical connection between the segment 7 and the electrical resistance heating element 8, there are provided male and female electrical connectors 21, 22 positioned on the end of the electrical resistance heating element 8 and on the bottom 16 of the hole 15 for housing the end of the cross member 3.

The electrical line which powers the heating means 5 has, finally, a manual switch 20 mounted on an upright member 2.

Assembly of the device 1 takes place in the following manner.

A module 6 is mounted on each end of the first cross member 3 by introducing the end of the cross member 3 into the coupling hole 15 until the electrical connectors 21, 22 are engaged and the tooth 18 snaps into the slot 19.

At this point, while the first cross member 3 is maintained oriented perpendicularly and coplanarly to the two upright members 2, the two modules 6 are inserted from a base of the cavity 9 of the two upright members 2 and pushed one by one towards the opposite base of the cavity 9 of the two upright members 2.

The modules 6 are slidingly guided with friction along the cavity 9 of the upright members 2, sliding along the guides 9a, 11a.

The final position of the two modules 6 is defined by specific stops, for example a closure plate 50 and screws 51 inserted into specific channels 52.

The modules 6 remain temporarily stationary in the final position as a result solely of the static friction that is created with the wall of the cavity 9 of the upright members 2 of the guides 9a, 11a.

Then another two modules 6 are mounted on the second cross member 3 in the same manner as previously indicated and, again in the same manner as previously indicated, the two new modules 6 are introduced into the cavity 9 of the two upright members 2 and the two new modules 6 are pushed until completing the mechanical and electrical connection with the two previously inserted modules 6, wherein the new modules 6 are juxtaposed to the previously inserted modules 6 and on the juxtaposed faces the male and female electrical connectors 13, 14 of the new modules 6 engage with those of the previously inserted modules 6.

The process is repeated up to the last available cross member 3, after which a closure plate is also applied at the base of the upright members 2 from which the modules 6 were introduced by means of screws that engage specific channels, preventing the two stacks of modules 6 from coming out of the upright members 2.

The connection of the electrical line supplying power to the heating elements 8 with an electrical source external to the device 1 can be made via the electrical connectors 13, 14 of the terminal modules 6 of the two stacks of modules 6.

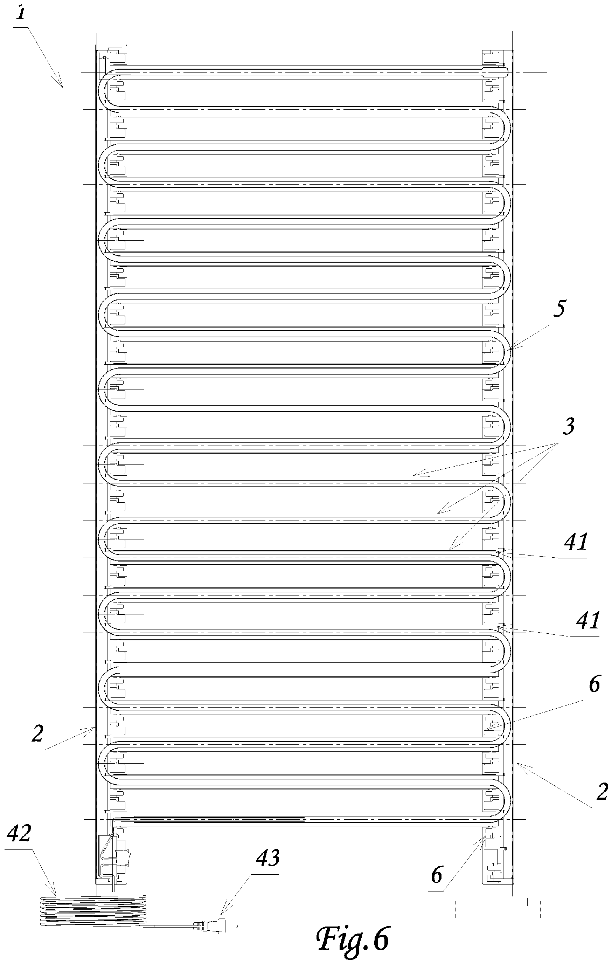

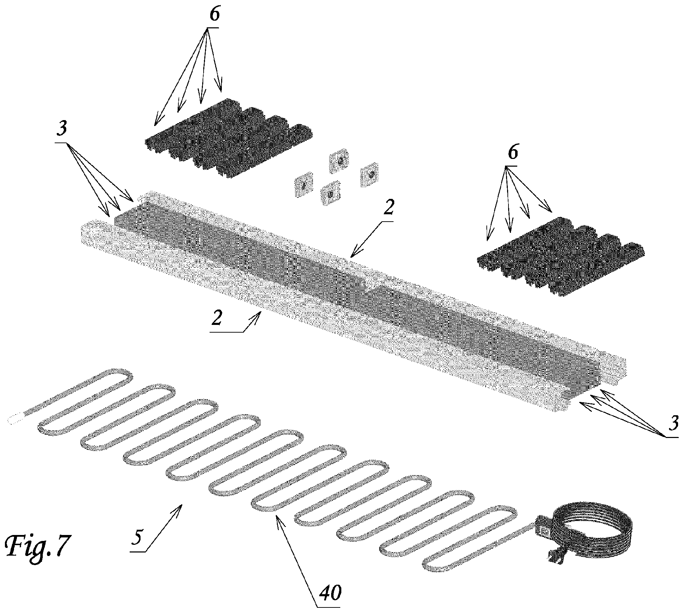

With reference to figures 6 and 7, the heating circuit 5 in this case comprises a flexible heating cable 40 which extends along the cross members 3, along the upright members 2 and through the modules 6. In this case the modules 6 are provided with specific channels 41 for the free passage of the flexible heating cable 40.

The heating cable 40 can be single or double to allow various levels of capacity to be managed. The assembly comprising the power cable 42 and heating cable 40 can be provided with a safety system consisting of a protective enclosure containing the plug 43, so as to assure that the assembly is connected to the power socket only when it has been installed inside the device. Assembly of the device 1 takes place in the following manner.

The modules 6 are connected to the ends of the cross members 3. The cross members 3 with the associated modules 6 are fitted onto the cable 40 in succession, leaving a space between one assembly thus produced and the next one.

The cable 40, in particular, is fitted into the axial cavity of the cross members 3 and the passage channel 41 of the modules 6.

The cable 40 is shaped with angles of 180 ° in portions of cable 40 external to the cross members 3 and one cross member 3 at a time is connected to the upright members 2 by inserting the respective modules 6 into the cavity of the upright members 2.

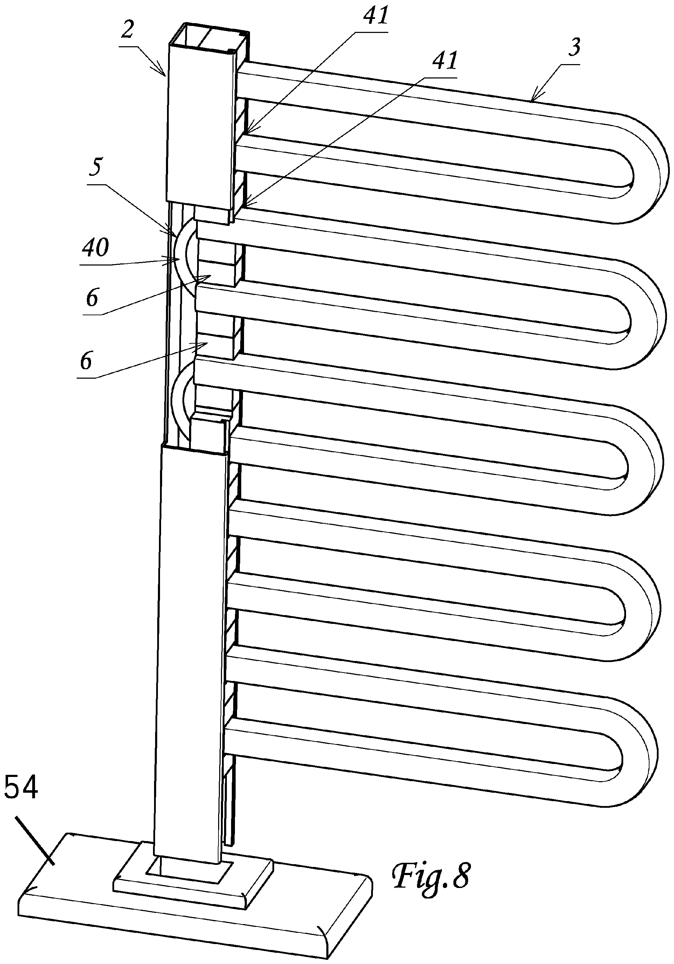

With reference to figure 8, there is provided only one upright member 2, and a plurality of U-shaped cross members 3 having at their ends connection modules 6 for connecting to the upright member 2.

In this case as well, the heating circuit 5 comprises a flexible heating cable 40 which extends along the cross members 3, along the upright member 2 and through specific free passage channels 41 fashioned in the modules 6.

With reference now to figures 4 and 5, they show a heating device 1 that differs from the ones just described substantially in that there is envisaged a heating circuit 5 comprising a channelization containing a heat carrier fluid, for example water circulating in the internal cavity 30 of the cross members 3.

In this case as well, therefore, the device 1 comprises two upright members 2 and a plurality of cross members 3 disposed between the upright members 2 and connected to the upright members 2 by means of modules 6 provided at each of the two ends of each cross member 3.

In this case as well, the modules 6 are engaged one by one with the next, forming a stack of modules 6 housed along a longitudinal cavity 9 which extends along the whole length of the upright member 2 and is accessible to the modules 6 from the bases of the upright member 2 and to the cross member 3 from a lateral opening of the upright member 2 which extends along the whole length of the upright member 2.

In this case as well, the longitudinal cavity 9 of the upright member 2 has a shape mating that of the modules 6 so as permit the guided insertion thereof along the axis of the upright member 2 without modifying their orientation.

In this case the segments 7 of the heating circuit 5 are channel segments of said channelization in fluid communication with the internal cavity 30 of the cross members 3.

The segments 7 provided in the adjacent modules 6 in this case as well are connected to one another in cascade fashion.

Obviously, specific fluid tightness systems 32, 33 must be provided on one side between the module 6 and module 6 and on the other side between the module 6 and cross member 3.

Assembly of the device 1 takes place as previously described and will thus not be repeated.

The heating device with an assemblable modular structure thus conceived is susceptible of numerous modifications and variants, all falling within the scope of the inventive concept.

For example, even a single upright member can be provided and used, to which one end of the cross members is connected by means of the modules.

Special spacers can also be provided in order to manage variable distances and empty spaces between the cross members.

The lower cross member can be configured for the insertion of an electronic control system and/or a blower.

The upper or a central cross member can comprise specific systems for connection to accessories such as, for example, clothes racks, also rotatable ones.

Special guide tracks 57 can be provided on the upright members 2 for the adjustable sliding of blocks 58 having a threaded hole for engaging a pin integral with a wall mounting bracket. Special threaded heads 56 can be provided for the connection to the plumbing system; these are screwed onto specific channels fashioned in the upright members 2.

The heads can also include an extension towards the wall which enables the wall mounting of the device.

The materials used, as well as the dimensions, may in practice be of any type, according to needs and the state of the art.

## Claims

1. A device (1) for heating a room having a modular structure also assemblable by user, comprising at least one upright member (2), a plurality of cross members (3), modules (6) assemblable to one another for the connection of said cross members (3) to said upright member (2), and a heating circuit (5) which extends along said upright member (2) and said cross members (3) and through said modules (6), **characterised in that** positioned along a longitudinal cavity (9) of said at least one upright member (2) there is stack of said modules (6) connected to one another in cascade fashion.

2. The device (1) for heating a room according to claim 1, **characterised in that** it comprises at least two upright members (2) between which said plurality of cross members (3) is disposed, said connection modules (6) being provided at each end of said cross members (3) for the connection of said cross members (3) to said two upright members (2).

3. The device (1) for heating a room according to claim 1, **characterised in that** a segment (7) of the heating circuit (5) is integrated in each of modules (6).

4. The device (1) for heating a room according to the preceding claim, **characterised in that** the segments (7) of the heating circuit (5) provided in the modules (6) of the stack of modules (6) are connected to one another in cascade fashion.

5. The device (1) for heating a room according to any one of claims 3 to 4, **characterised in that** each of modules (6) has a shape mating that of said longitudinal cavity (9), which in turn has sliding guides (11a, 9a) for said modules (6).

6. The device (1) for heating a room according to claim 1, **characterised in that** said at least one upright member (2) has, along its whole length, an opening (11) for the access of said end of said cross member (3) to said longitudinal cavity (9).

7. The device (1) for heating a room according to the preceding claim, **characterised in that** each of said modules (6) has a hole (15) for the quick coupling of the end of said cross member (3) by means of a tooth (18) in a recess (19).

8. The device (1) for heating a room according to any preceding claim, **characterised in that** said heating circuit (5) comprises electrical resistance heating elements (8) positioned in said cross members (3).

9. The device (1) for heating a room according to claims 3 and **characterised in that** said segments (7) are segments of an electrical line supplying power to said heating elements (8).

10. The device (1) for heating a room according to the preceding claim, **characterised in that** each of said modules (6) is made of an electrically insulating material in which said segment (7) of an electrical line is encased.

11. The device (1) for heating a room according to either of claims 9 and 10, **characterised in that** said heating circuit (5) has a manual switch mounted on said at least one upright member (2).

12. The device (1) for heating a room according to claim 1, **characterised in that** said heating circuit (5) comprises a flexible heating cable (40) which extends along said cross members (3), along said at least one upright member (2) and through said modules (6).

13. The device (1) for heating a room according to any one of claims 1 to 8, **characterised in that** said heating circuit (5) comprises a channel containing a heat carrier fluid.

14. The device (1) for heating a room according to the preceding claim, **characterised in that** said segments (7) are channel segments of said channel.

15. An assemblable modular heating system **characterised in that** it comprises a plurality of devices (1) according to any preceding claim connected in cascade fashion, directly or via straight or angle couplings.

16. A process for producing a device (1) for heating a room made up of at least one upright member (2) and a plurality of cross members (3) containing within them a heating means (5), **characterised in that** the cross members (3) are connected to the upright member (2) by applying a connection module (6) to the end of each cross member (3) and introducing in succession the modules (6) along a longitudinal cavity (9) of the upright member (2), making the end of the cross member (3) slide along a lateral opening (11) of the upright member (2) provided to enable access of the end of the cross members (3) to the longitudinal cavity (9) of the upright member (2).

## Patentansprüche

1. Vorrichtung (1) zur Erwärmung eines Zimmers mit einem modularen Aufbau, der auch von einem Benutzer montierbar ist,
umfassend mindestens ein aufrechtes Element (2), eine Vielzahl an Querträgern (3), Module (6), die zur Verbindung der Querträger (3) mit dem aufrechten Element (2) miteinander montierbar sind, und einen Heizkreis (5), der sich entlang des aufrechten Elements (2) und des Querträgers (3) und durch die Module (6) erstreckt, **dadurch gekennzeichnet, dass** entlang eines Längshohlraums (9) des mindestens einen aufrechten Elements (2) ein Stapel der Module (6) vorhanden ist, die kaskadenartig miteinander verbunden sind.

2. Vorrichtung (1) zur Erwärmung eines Zimmers nach Anspruch 1, **dadurch gekennzeichnet, dass** sie mindestens zwei aufrechte Elemente (2) umfasst, zwischen denen die Vielzahl an Querträgern (3) angeordnet sind, wobei die Verbindungsmodule (6) am jeden Ende der Querträger (3) zur Verbindung der Querträger (3) mit den beiden aufrechten Elementen (2) vorgesehen sind.

3. Vorrichtung (1) zur Erwärmung eines Zimmers nach Anspruch 1, **dadurch gekennzeichnet, dass** in einem jeden der Module (6) ein Segment (7) des Heizkreises (5) integriert ist.

4. Vorrichtung (1) zur Erwärmung eines Zimmers nach dem vorhergehenden Anspruch, **dadurch gekennzeichnet, dass** die in den Modulen (6) des Stapels der Module (6) vorgesehenen Segmente (7) des Heizkreises (5) kaskadenartig miteinander verbunden sind.

5. Vorrichtung (1) zur Erwärmung eines Zimmers nach einem der Ansprüche 3 bis 4, **dadurch gekennzeichnet, dass** ein jedes der Module (6) eine Form aufweist, die mit der des Längshohlraums (9) zusammenpasst, der wiederum Gleitführungen (11a, 9a) für die Module (6) aufweist.

6. Vorrichtung (1) zur Erwärmung eines Zimmers nach Anspruch 1, **dadurch gekennzeichnet, dass** das mindestens eine aufrechte Element (2) über seine gesamte Länge eine Öffnung (11) für den Zugang des Endes des Querträgers (3) zum Längshohlraum (9) aufweist.

7. Vorrichtung (1) zur Erwärmung eines Zimmers nach dem vorhergehenden Anspruch, **dadurch gekennzeichnet, dass** ein jedes der Module (6) ein Loch (15) zum schnellen Koppeln des Endes des Querträgers (3) mittels eines Zahns (18) in einer Aussparung (19) aufweist.

8. Vorrichtung (1) zur Erwärmung eines Zimmers nach einem der vorhergehenden Ansprüche, **dadurch gekennzeichnet, dass** der Heizkreis (5) elektrische Widerstandsheizelemente (8) umfasst, die in den Querträgern (3) positioniert sind.

9. Vorrichtung (1) zur Erwärmung eines Zimmers nach Anspruch 3 und **dadurch gekennzeichnet, dass** die Segmente (7) Segmente einer elektrischen Leitung sind, die die Heizelemente (8) mit Strom versorgt.

10. Vorrichtung (1) zur Erwärmung eines Zimmers nach dem vorhergehenden Anspruch, **dadurch gekennzeichnet, dass** ein jedes der Module (6) aus einem elektrisch isolierenden Material besteht, in dem das Segment (7) einer elektrischen Leitung eingeschlossen ist.

11. Vorrichtung (1) zur Erwärmung eines Zimmers nach einem der Ansprüche 9 und 10, **dadurch gekennzeichnet ist, dass** der Heizkreis (5) einen manuellen Schalter aufweist, der an dem mindestens einen aufrechten Element (2) angebracht ist.

12. Vorrichtung (1) zur Erwärmung eines Zimmers nach Anspruch 1, **dadurch gekennzeichnet, dass** der Heizkreis (5) ein flexibles Heizkabel (40) umfasst, das sich entlang der Querträger (3) entlang des mindestens einen aufrechten Elements (2) und durch die Module (6) erstreckt.

13. Vorrichtung (1) zur Erwärmung eines Zimmers nach einem der Ansprüche 1 bis 8, **dadurch gekennzeichnet, dass** der Heizkreis (5) einen Kanal umfasst, der ein Wärmeträgerfluid enthält.

14. Vorrichtung (1) zur Erwärmung eines Zimmers nach dem vorhergehenden Anspruch, **dadurch gekennzeichnet, dass** die Segmente (7) Kanalsegmente des Kanals sind.

15. Montierbares modulares Heizsystem, **dadurch gekennzeichnet, dass** es eine Vielzahl an Vorrichtungen (1) nach einem der vorhergehenden Ansprüche umfasst, die kaskadenartig direkt oder über gerade oder Winkelkupplungen verbunden sind.

16. Verfahren zur Herstellung einer Vorrichtung (1) zur Erwärmung eines Zimmers, die aus mindestens einem aufrechten Element (2) und einer Vielzahl an Querträgern (3) besteht, die darin ein Heizmittel (5) enthalten, **dadurch gekennzeichnet, dass** die Querträger (3) mit dem aufrechten Element (2) verbunden sind, indem ein Verbindungsmodul (6) an das Ende eines jeden Querträgers (3) angelegt ist und die Module (6) nacheinander entlang eines Längshohlraums (9) des aufrechten Elements (2) eingeführt sind, wobei das Ende des Querträgers (3) entlang einer seitlichen Öffnung (11) des aufrechten Elements (2) gleiten gelassen wird, vorgesehen, um den Zugang des Endes der Querträger (3) zum Längshohlraum (9) des aufrechten Elements (2) zu erlauben.

## Revendications

1. Dispositif (1) de chauffage d'une pièce ayant une structure modulaire également assemblable par un utilisateur,
comprenant au moins un élément vertical (2), une pluralité d'éléments transversaux (3), des modules (6) assemblables les uns aux autres pour la liaison desdits éléments transversaux (3) audit élément vertical (2), et un circuit de chauffage (5) qui s'étend le long dudit élément vertical (2) et desdits éléments transversaux (3) et à travers lesdits modules (6), **caractérisé en ce que**, positionné le long d'une cavité longitudinale (9) dudit au moins un élément vertical (2), il y a une pile desdits modules (6) reliés les uns aux autres en cascade.

2. Dispositif (1) de chauffage d'une pièce selon la revendication 1, **caractérisé en ce qu'**il comprend au moins deux éléments verticaux (2) entre lesquels ladite pluralité d'éléments transversaux (3) est disposée, lesdits modules de liaison (6) étant prévus à chaque extrémité desdits éléments transversaux (3) pour la liaison desdits éléments transversaux (3) auxdits deux éléments verticaux (2) .

3. Dispositif (1) de chauffage d'une pièce selon la revendication 1, **caractérisé en ce qu'**un segment (7) du circuit de chauffage (5) est intégré dans chacun desdits modules (6).

4. Dispositif (1) de chauffage d'une pièce selon la revendication précédente, **caractérisé en ce que** les segments (7) du circuit de chauffage (5) prévus dans les modules (6) de la pile de modules (6) sont reliés entre eux en cascade.

5. Dispositif (1) de chauffage d'une pièce selon l'une quelconque des revendications 3 à 4, **caractérisé en ce que** chacun desdits modules (6) a une forme correspondant à celle de ladite cavité longitudinale (9), qui comporte en outre des guides coulissants (lia, 9a) pour lesdits modules (6).

6. Dispositif (1) de chauffage d'une pièce selon la revendication 1, **caractérisé en ce que** ledit au moins un élément vertical (2) a, sur toute sa longueur, une ouverture (11) pour l'accès de ladite extrémité dudit élément transversal (3) à ladite cavité longitudinale (9).

7. Dispositif (1) de chauffage d'une pièce selon la revendication précédente, **caractérisé en ce que** chacun desdits modules (6) a un trou (15) pour l'accouplement rapide de l'extrémité dudit élément transversal (3) au moyen d'une dent (18) dans un renfoncement (19).

8. Dispositif (1) de chauffage d'une pièce selon l'une quelconque des revendications précédentes, **caractérisé en ce que** ledit circuit de chauffage (5) comprend des éléments chauffants à résistance électrique (8) positionnés dans lesdits éléments transversaux (3).

9. Dispositif (1) de chauffage d'une pièce selon la revendication 3 et **caractérisé en ce que** lesdits segments (7) sont des segments d'une ligne électrique fournissant de l'énergie auxdits éléments chauffants (8).

10. Dispositif (1) de chauffage d'une pièce selon la revendication précédente, **caractérisé en ce que** chacun desdits modules (6) est constitué d'un matériau électriquement isolant dans lequel ledit segment (7) d'une ligne électrique est encastré.

11. Dispositif (1) de chauffage d'une pièce selon l'une quelconque des revendications 9 et 10, **caractérisé en ce que** ledit circuit de chauffage (5) a un interrupteur manuel monté sur ledit au moins un élément vertical (2).

12. Dispositif (1) de chauffage d'une pièce selon la revendication 1, **caractérisé en ce que** ledit circuit de chauffage (5) comprend un câble chauffant flexible (40) qui s'étend le long desdits éléments transversaux (3), le long dudit au moins un élément vertical (2) et à travers lesdits modules (6).

13. Dispositif (1) de chauffage d'une pièce selon l'une quelconque des revendications 1 à 8, **caractérisé en ce que** ledit circuit de chauffage (5) comprend un canal contenant un fluide caloporteur.

14. Dispositif (1) de chauffage d'une pièce selon la revendication précédente, **caractérisé en ce que** lesdits segments (7) sont des segments de canal dudit canal.

15. Système de chauffage modulaire assemblable **caractérisé en ce qu'**il comprend une pluralité de dispositifs (1) selon l'une quelconque des revendications précédentes reliés en cascade, directement ou par l'intermédiaire d'accouplements droits ou angulaires.

16. Procédé de fabrication d'un dispositif (1) de chauffage d'une pièce constitué d'au moins un élément vertical (2) et d'une pluralité d'éléments transversaux (3) contenant à l'intérieur un moyen de chauffage (5), **caractérisé en ce que** les éléments transversaux (3) sont reliés à l'élément vertical (2) en appliquant un module de liaison (6) à l'extrémité de chaque élément transversal (3) et en introduisant successivement les modules (6) le long d'une cavité longitudinale (9) de l'élément vertical (2), faisant glisser l'extrémité de l'élément transversal (3) le long d'une ouverture latérale (11) de l'élément vertical (2) prévue pour permettre l'accès de l'extrémité des éléments transversaux (3) à la cavité longitudinale (9) de l'élément vertical (2) .
